# EUROPÄISCHE PATENTSCHRIFT

(11) **EP 1 029 727 B1**
(45) Veröffentlichungstag und Bekanntmachung des Hinweises auf die Patenterteilung: **02.05.2003**
(21) Anmeldenummer: 00100626.1
(22) Anmeldetag: 13.01.2000
(51) Int. Cl.: B60J 7/057

(54) **Schiebedach für Fahrzeuge**
Sliding roof for vehicles
Toit coulissant pour véhicules

(30) Priorität: 16.02.1999 DE 19906334; 31.03.1999 DE 19914657
(43) Veröffentlichungstag der Anmeldung: 23.08.2000
(73) Patentinhaber: Dr.Ing. h.c.F. Porsche Aktiengesellschaft, 70435 Stuttgart (DE)
(72) Erfinder: Ritter, Bernhard, 75181 Pforzheim (DE); Tomaschko, Martin, 71665 Vaihingen (DE)

(56) Entgegenhaltungen:
- EP-A- 0 381 066
- EP-A- 0 403 734
- DE-A- 3 545 869
- DE-A- 3 930 755

## Beschreibung

Die Erfindung betrifft ein Schiebedach für Fahrzeuge nach dem Oberbegriff des Patentanspruches 1, wie es bereits aus der EP 0 403 734 A bekannt ist.

Aus dieser Druckschrift ist es bekannt, Schiebedächer für Fahrzeuge aus einer Schließstellung heraus zum einen in eine Offenstellung und zum anderen in eine Hubstellung zu bringen. Der Deckel des Schiebedaches erreicht hierbei eine Schließstellung aus zwei Richtungen, nämlich aus der Hubstellung von oben kommend und aus der Offenstellung von unten kommend.

Bei einem derartigen Bewegungsablauf stellt sich das Problem, daß auch bei Berücksichtigung der Lose, bei der Berechnung der Position des Schiebedaches aufgrund der verbleibenden Elastizitäten im Schiebedach-Antrieb, die Schließstellung nicht exakt reproduzierbar erreicht werden kann. Insbesondere ist die Schließstellung, wenn sie aus der Offenstellung erreicht worden ist, nicht mit der Schließstellung identisch, die aus Hubstellung erreicht wird.

Es ist Aufgabe der Erfindung, ein Schiebedach der gattungsgemäßen Art zu schaffen, bei der die Schließstellung exakt reproduzierbar erreicht wird.

Diese Aufgabe wird erfindungsgemäß mit den Merkmalen des Patentanspruches 1 gelöst. Erfindungsgemäß wird vorgeschlagen, die Schließstellung stets nur aus einer einzigen ausgewählten Bewegungsrichtung anzufahren und bei einem Schließvorgang aus der nicht ausgewählten Bewegungsrichtung die Schließstellung zu durchfahren und nachfolgend aus der ausgewählten Bewegungsrichtung anzufahren. Durch diese Maßnahme wird der Einfluß der Getriebelose und Elastizitäten im Antrieb des Schiebedaches unterdrückt, und der Deckel erreicht bei jedem (endgültigen) Schließvorgang dieselbe Lage. In vorteilhafter Weise ist hiermit der optische Eindruck des Fahrzeuges verbessert und der Deckel des Schiebedaches kann in der Schließstellung so ausgerichtet werden, daß die bei geschlossenem Deckel durch den um den Deckel umlaufenden Spalt erzeugten Windgeräusche minimiert sind. Im einem Ausführungsbeispiel konnte durch die Erfindung die Lagetoleranz des Deckels in seiner Schließstellung von 1,5 mm auf 0,1 mm verbessert werden. Außerdem ist die Erfindung in einfacher Weise durch entsprechende Programmierung eines Steuergerätes und insbesondere ohne kostenaufwendige mechanische Zusatzmaßnahmen möglich. Zusätzlich wird vorgeschlagen, dafür zu sorgen, daß der Deckel des Schiebedaches beim Durchfahren der Schließstellung nicht aus einer Dichtung des Schiebedaches herausbewegt wird. Hiermit wird verhindert, daß beim Durchtauchen des Deckels durch die Schließstellung am Rand des Deckels ein Spalt gebildet wird, der zu störenden Windgeräuschen und unter Umständen auch zu Druckveränderungen im Fahrzeuginnenraum führen könnte.

Schließlich wird vorgeschlagen, den Schließvorgang aus der nicht ausgewählten Bewegungsrichtung selbsttätig ablaufen zu lassen, sobald die Schließstellung das erste Mal erreicht ist. Gemäß dieser Ausbildung wird das Durchtauchen des Deckels auch dann durchgeführt, wenn der Benutzer ein Betätigungsschalter für das Schiebedach losläßt, sobald der Deckel das erste Mal seine Schließposition erreicht. Insbesondere in Verbindung mit der vorstehenden Ausbildung ist ein solcher Vorgang ohne Gefahr möglich, da bei dieser automatisch ablaufenden Bewegung kein Spalt gebildet wird, in dem Finger oder Gegenstände eingeklemmt werden könnten.

Die Erfindung ist nachstehend anhand des in den Figuren dargestellten Ausführungsbeispieles näher erläutert.

Es zeigen
- Figur 1: eine schematische Darstellung eines fremdkraftgetriebenen Schiebedaches für Fahrzeuge,
- Figur 2: eine Detailansicht zur Figur 1,
- Figur 3: einen Bewegungsablauf beim Schließen des Schiebedaches aus seiner Offenstellung und
- Figur 4: einen Bewegungsablauf beim Schließen des Schiebedaches aus einer Hubstellung.

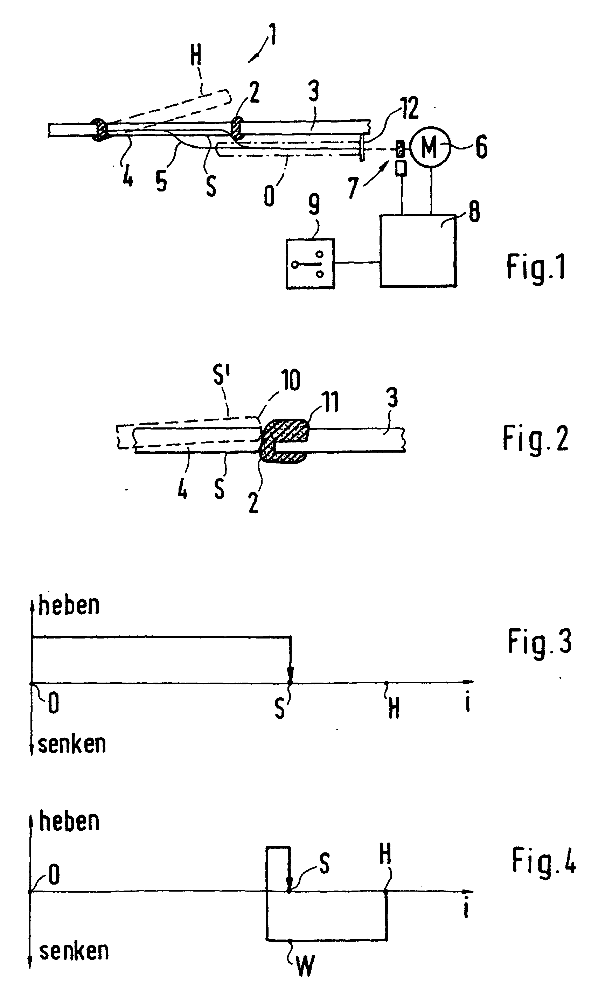

Das in Figur 1 gezeigte Schiebedach 1 ist in einen Karosserieausschnitt 2 eines nur bereichsweise dargestellten Fahrzeuges 3 eingesetzt. Das Schiebedach 1 besteht aus einem in die Karosserieöffnung 2 eingepaßten Deckel 4, einer Führung 5, einem elektrischen Antriebsmotor 6, einem mit dem Motor 6 verbundenen Positionsgeber 7, einem Steuergerät 8 sowie einem Betätigungsschalter 9. Aus der dargestellten Schließstellung S kann das Schiebedach 1 in eine Hubstellung H (strichliert dargestellt) sowie eine Offenstellung O (strichpunktiert dargestellt) verbracht werden.

Figur 2 zeigt in einer Detailansicht eine Hinterkante 10 des Deckels 4, die in der Schließstellung S an einer den Karosserieausschnitt 2 begrenzenden Dichtung 11 anliegt. Die Position der Hinterkante 10 ist insoweit von Bedeutung, als in der strichliert dargestellten zweiten Schließstellung S' die Hinterkante 10 über die Dichtung 11 hinausragt und dadurch bei schneller Fahrt hochfrequente, sehr störende Geräusche erzeugt. Die zweite Schließstellung S' wird erreicht, wenn der Deckel 4 aus der Hubstellung H geschlossen wird, während die Schließstellung S erreicht wird, wenn der Deckel 4 aus der Offenstellung O geschlossen wird. Ursächlich hierfür sind Lose und Elastizitäten in der Führung 5, in den innerhalb der Führung untergebrachten, mit dem Motor 6 verbundenen Antriebselementen (nicht dargestellt) sowie im Motor 6 bzw. in dem mit dem Motor 6 verbundenen Getriebe.

Die Position des Deckels 4 wird durch den Positionsgeber 7 erfaßt, der drehfest mit dem Motor 6 verbunden ist und abhängig von der Drehung des Motors 6 Impulse abgibt; im vorliegenden Fall sind dies zwei Impulse je Umdrehung. Im Steuergerät 8 ist ein nicht dargestellter Zähler vorgesehen, der die vom Positionsgeber 7 abgegebenen Impulse erfaßt. Im Steuergerät 8 ist die Schließstellung S bei der Erstmontage des Schiebedaches 1 programmiert, indem ausgehend von der Offenstellung O die Zahl der Impulse bis zum Erreichen der Schließstellung S erfaßt wurden. Der Zähler wird immer dann auf 0 gesetzt, wenn der Deckel 4 in die Offenstellung O gefahren wurde. In dieser Position stößt der Deckel 4 an einen baulich vorgesehenen Anschlag 12 an. Das Steuergerät 8 erkennt am plötzlich erhöhten Strombedarf des Motors 6, daß die Endposition erreicht ist, und setzt den Zähler auf den Wert 0 zurück. Hiermit wird bei der Erstmontage sowie bedarfsweise auch im laufenden Betrieb sichergestellt, daß der Zählerstand stets der aktuellen Position des Deckels 4 entspricht.

In Figur 3 ist der Bewegungsablauf beim Schließen des Schiebedaches 1 anhand des Zählerstandes i dargestellt. Der Deckel befindet sich in der Offenposition O und wird auf eine Betätigung des Schalters 9 hin durch eine Bestromung des Motors 6 in Richtung "heben" solange bewegt, bis die Schließstellung S erreicht ist. Der Deckel 4 steht nun in der in Figur 2 gezeigten Schließstellung S, die er in der Darstellung nach Figur 2 von unten kommend erreicht hat.

Figur 4 zeigt den Bewegungsablauf beim Schließen des Schiebedaches 1 aus einer Hubstellung H. Auf eine entsprechende Betätigung des Betätigungsschalters 9 hin wird der Motor 6 in Richtung "senken" betätigt. Erreicht hierbei am Punkt W der Zählerstand i den der Schließstellung S zugeordneten Zählerstand, so wird der Motor 6 noch eine kurze Zeit lang betätigt, bis der Deckel 4 sicher unterhalb der Schließstellung S abgesenkt wird. Hierbei ist darauf zu achten, daß bei dieser weiteren Betätigung die Hinterkante 10 nicht die Dichtung 11 verläßt, d.h. durch die weitere Betätigung kein Spalt gebildet wird. Anschließend wird der Motor 6 kurz in Richtung "heben" angesteuert, bis die Schließstellung S wieder erreicht wird. In der Darstellung nach Figur 2 bedeutet dies, daß der Deckel 4 bei einem Schließen aus der Hubstellung H kurz unter die Schließstellung S hindurchtaucht, um dann die Schließstellung S wieder von unten kommend zu erreichen. Hierbei läuft der Schließvorgang ab der Position W automatisch, das heißt auch ohne weitere Betätigung des Betätigungsschalters 9 ab.

Da der Deckel 4 auch bei einem Schließen aus der Hubstellung H aus derselben Richtung in seine Schließstellung S gebracht wird, wie dies bei einem Schließen aus der Offenstellung O der Fall ist, ist sichergestellt, daß bei beiden Schließvorgängen eine identische Schließposition S erreicht wird. Insbesondere wird vermieden, daß der Deckel 4 die Schließstellung S' einnimmt.

Durch diese Vorgehensweise wird der Einfluß von Getriebelosen, die in der Führung 5 sowie den innerhalb der Führung 5 vorgesehenen Antriebselementen vorhanden sind, unterdrückt. Darüber hinaus ist auch sichergestellt, daß die Dichtung 11 in stets gleicher Weise verformt ist, wenn sich der Deckel 4 in der Schließstellung S befindet. Da auch die äußere Form der Dichtung 11 Einfluß auf Windgeräusche im Bereich der Hinterkante 10 des Deckels 4 hat, kann mit der beschriebenen Vorgehensweise auch sichergestellt werden, daß die Dichtung 11 stets die für eine minimierte Geräuschentwicklung optimale Form annimmt.

## Patentansprüche

1. Schiebedach (1) für Fahrzeuge, wobei das Schiebedach fremdkraftgetrieben aus einer Schließstellung (S) durch Bewegen eines Deckels (4) in einer ersten Bewegungsrichtung in eine Offenstellung (O) und durch Bewegen des Deckels (4) in einer zweiten Bewegungsrichtung aus der Schließstellung (S) in eine Hubstellung (H) verbringbar ist, **dadurch gekennzeichnet, daß** die Schließstellung (S) stets aus nur einer, zwischen der ersten und der zweiten ausgewahlten Bewegungsrichtung angefahren wird, und daß bei einem Schließvorgang aus der nicht ausgewählten Bewegungsrichtung die Schließstellung (S) durchfahren und nachfolgend aus der ausgewählten Bewegungsrichtung angefahren wird.

2. Schiebedach nach Anspruch 1, **dadurch gekennzeichnet, daß** beim Durchfahren der Schließstellung (S) der Deckel (4) nur so weit weiterbewegt wird, daß er nicht aus einer Dichtung (11) heraustritt.

3. Schiebedach nach Anspruche 2, **dadurch gekennzeichnet, daß** der Schließvorgang aus der nicht ausgewählten Bewegungsrichtung nach einem ersten Erreichen der Schließstellung (S) selbsttätig bis zum zweiten Erreichen der Schließstellung (S) durchgeführt wird.

## Claims

1. A sliding roof (1) for vehicles, wherein the sliding roof can be moved, driven by external force, from a closed position (**S**) into an open position (**O**) by movement of a cover (4) in a first direction of movement and from the closed position (**S**) into a lifting position (**H**) by movement of the cover (4) in a second direction of movement, **characterized in that** the closed position (**S**) is always entered from only one direction of movement selected between the first and the second, and in the case of a closing procedure from the direction of movement not selected the closed position (**S**) is traversed and is subsequently entered from the direction of movement selected.

2. A sliding roof according to Claim 1, **characterized in that** when the closed position (**S**) is traversed the cover (4) is moved further only to the extent that it does not move out of a seal (11).

3. A sliding roof according to Claim 2, **characterized in that** the closing procedure from the direction of movement not selected is carried out automatically after the closed position (**S**) is reached for the first time until the closed position (**S**) is reached for the second time.

## Revendications

1. Toit coulissant (1) pour véhicules, le toit coulissant pouvant être amené, entraîné par une force externe, d'une position fermée (S), par déplacement d'un couvercle (4) dans un premier sens de déplacement, dans une position ouverte (O) et, par déplacement du couvercle (4) dans un deuxième sens de déplacement, de la position fermée (S) dans une position de levage (H), **caractérisé en ce que** la position fermée (S) est toujours approchée à partir seulement d'un sens de déplacement sélectionné entre le premier et le deuxième sens de déplacement, et **en ce que** pendant une opération de fermeture à partir du sens de déplacement non sélectionné, la position fermée (S) est traversée et est ensuite approchée à partir du sens de déplacement sélectionné.

2. Toit coulissant selon la revendication 1, **caractérisé en ce que** pendant la traversée de la position fermée (S), le couvercle (4) n'est déplacé plus loin que sur une distance telle qu'il ne ressorte pas d'une garniture d'étanchéité (11).

3. Toit coulissant selon la revendication 2, **caractérisé en ce que** l'opération de fermeture à partir du sens de déplacement non sélectionné et après qu'a été atteinte une fois la position fermée (S), est exécutée automatiquement jusqu'à ce que soit atteinte une deuxième fois la position fermée (S).
